# EUROPEAN PATENT SPECIFICATION

(11) **EP 2 506 154 B1**
(45) Date of publication and mention of the grant of the patent: **09.07.2014**
(21) Application number: 12162469.6
(22) Date of filing: 30.03.2012
(51) Int. Cl.: G06F 17/22, G06F 17/27, H04L 12/58, G06Q 10/10

(54) **Text, character encoding and language recognition**
Text, Zeichencodierung und Sprachenerkennung
Code de texte et de caractères et reconnaissance du langage

(30) Priority: 31.03.2011 GB 201105509
(43) Date of publication of application: 03.10.2012
(73) Proprietor: Clearswift Limited, Reading, Berkshire RG7 4SA (GB)
(72) Inventor: Schofield, Kevin, Thatcham, Berkshire RG18 3GB (GB); Biro, Istvan, 2064 Csabdi (HU)
(74) Representative: O'Connell, David Christopher

(56) References cited:
- US-A- 5 062 143
- US-A- 6 157 905
- US-B1- 7 711 673
- GRAHAM RUSSELL ET AL: "Automatic Identification of Language and Encoding", INTERNET CITATION, 1 January 2005 (2005-01-01), page 21pp, XP007906730, Retrieved from the Internet: URL:http://rali.iro.umontreal.ca/Publicati ons/files/AILE-RussellLapalmePlamondon.pdf [retrieved on 2009-01-07]
- HAKKINEN J ET AL: "N-gram and decision tree based language identification for written words", IEEE WORKSHOP ON AUTOMATIC SPEECH RECOGNITION AND UNDERSTANDING, 9 December 2001 (2001-12-09), pages 335-338, XP010603744, ISBN: 978-0-7803-7343-3
- Li Shanjian ET AL: "A composite approach to language/encoding detection", , 25 November 2002 (2002-11-25), pages 1-16, XP055048374, Retrieved from the Internet: URL:http://www-archive.mozilla.org/project s/intl/UniversalCharsetDetection.html [retrieved on 2012-12-19]
- KIKUI ET AL: "Identifying the coding system and language of on-line documents on the internet", INTERNATIONAL CONFERENCE ON COMPUTATIONAL LINGUISTICS.PROCEEDINGS OF COLING, 1 August 1996 (1996-08-01), pages 652-657, XP002099142,

## Description

This invention relates to a method and a system for recognizing whether some electronic data is the digital representation of a piece of text and if so in which character encoding it has been encoded.

As is well known, documents and other electronic files need to be encoded into a digital format, before they can be used in any electronic device. In the early days of computing documents were predominantly encoded using the American Standard Code for Information Interchange (ASCII). This provides a 7-bit encoding, allowing 128, i.e. 2⁷, characters to cover the uppercase and lowercase English letters, numeric digits, English punctuation and special symbols such as the US dollar to be encoded.

Subsequently a number of national and international standards bodies and businesses have defined character sets and associated character encodings to represent text in languages that cannot be represented in ASCII. For example, the International Standards Organisation (ISO) has defined a series of character encodings, ISO 8859, for European and Middle Eastern languages including ISO 8859-1 which includes characters used in Western European languages and ISO 8859-8 which includes characters from contemporary Hebrew. Similarly ISO has defined the ISO 2022 series of character encodings which perform the same function for Chinese, Japanese and Korean.

More recently, international efforts to standardise on a single character set that can represent text from any language, ISO 10646, has itself given rise to six standard character encodings for this one character set; namely UTF-7, UTF-8, UTF16-LE, UTF16-BE, UTF32-LE and UTF32-BE.

Within an electronic representation of a piece of text, characters are encoded as a sequence of bytes. For example, in the case of ASCII, each character is represented by the 7 least significant bits of a byte, and in UTF32-BE each character is represented by four bytes (a 32 bit value) in big-endian byte order. Other character encodings are more complex; for example, members of the ISO 2022 series of character encodings use special byte sequences to switch between tables that map subsequent byte values in the text representation to characters in the character set.

When processing some data it is sometimes necessary to identify what type of data it is, so that it can be processed in the correct manner, and when processing textual data it is necessary to know which character encoding has been used so that it can be viewed, analysed and/or otherwise processed correctly, for example searched for unwanted text or classified into one of a number of categories.

In some data processing systems, but by no means all, there are means of identifying the type of data and the character encoding of any textual data, but they are not always used and are sometimes misused, so a robust mechanism to make these determinations is critical to the correct analysis and processing of data.

There have been several different approaches to determining the character encoding. Schmitt discloses in US 5,062,143 a way of breaking the text down into trigrams and matching these with trigram sets of known languages, assuming that the correct character encoding has been discovered when the number of matches exceeds a prescribed value.

Powell discloses in US 6,157,905 a method of identifying language based on statistical analysis of the frequency of occurrence of n-grams.

Porter et al. disclose in US 7,148,824 a mechanism that tests the text strings in a document to determine whether they contain legal numeric codes. A statistical analysis of the text strings is then conducted to provide a mapping of legally coded candidates, which are then ranked and combined with an expected ranking to provide a most probable character encoding.

The Open Source Mozilla project provided libraries to perform character set encoding recognition in 2002 and this work has continued since. The Open Source International Components for Unicode (ICU) library also provides code to detect a number of character encodings, and between them they are currently seen as state of the art. This is described in a presentation "Automatic Character Set Recognition", Mader, et al., available on the internet at http://icu-project.org/docs/papers/Automatic-Charset_Recognition_1UC29.ppt .

Each library runs a multi-stage process where specific algorithms are applied to the text to determine whether a particular character encoding is in use. For each possible character encoding a confidence level is returned. The result is an array, one for each possible encoding, containing the confidence level that the text is in that encoding. For those using the libraries, a simple approach is to scan the array returned and locate the entry with the highest confidence level. An alternative call to the libraries simply returns the most likely character encoding, which in some cases allows for the libraries to take short cuts when the character encoding used is clear. This works well for certain encodings such as ISO 2022-CN where the algorithm used can detect with a high degree of certainty whether the text is encoded that way or not, and other encoding algorithms have very low misidentification scores.

The problem with the current state of the art is that certain character encodings, especially members of the ISO 8859 series, are very hard to distinguish from each other, and hence there is a high chance of misidentification. Unlike the ISO 2022-CN case, where there is one very high confidence level in the array, in this case scanning the returned array will typically reveal a number of entries all with similarly high confidence levels, and so simply choosing the highest is very prone to error.

The reason for this is that all ISO 8859 series members have the same 128 ASCII characters, and the remaining 128 values have been assigned various accented characters, many of which are rarely used. The algorithm used in the current state of art in this case is to take either pairs or triples of bytes and try to identify common sequences. Because the different accented characters are used rarely it is hard to differentiate the encodings.

It is known in other contexts to use statistical classification systems to distinguish automatically between inputs that can fall into different classes. However, in order for such classification to be able to distinguish successfully between the inputs, it is necessary to characterize the inputs by means of a "fingerprint" that contains enough information for this purpose. An attempt to use statistical classification to distinguish between data that is encoded in different members of the ISO 8859 series, using the algorithms from the known character encoding recognition techniques as the basis for generating the fingerprint, would fail to distinguish adequately between them, for the same reasons that the existing techniques can fail.

An internet discussion found at http://www.velocityreviews.com/forums/t685461-java-programming-how-to-detect-the-file-encoding.html contains the suggestion that "One could make byte-value frequency statistics of many files in some common encodings and compare them to the byte-value frequency of the source given." However, this is not suitable for distinguishing between all of the possible character encodings.

There is therefore a need to improve the accuracy of automatic detection of character encodings.

The approach taken by the present invention is to use a new method for making the final determination as to which character encoding has been used, using the results of some well understood data analysis techniques. Whereas other approaches apply simple ranking or algorithmic techniques to the data analysis results, this invention uses statistical classification to compare the data analysis results against those for a predetermined set of known cases. This means that all data analysis results are used in the final determination, rather than one or two results dominating the outcome as occurs with the other methods.

Furthermore, using statistical classification to make the final determination facilitates the use of new data analysis techniques. The well understood data analysis techniques effectively attempt to determine how closely the data under test matches the characteristics of a particular character encoding. An example of a new technique is one that highlights the difference in the use of certain character code points in different character encoding and language combinations to provide separation between very similar character encodings such as those from the ISO 8859 series. This leads to a reduction in the number of incorrect determinations.

By choosing different classifications, data analysis techniques and training data the method can be extended to not only make a determination of the character encoding but also language, whether the data is textual or non-textual and even between different types of non-textual data.

According to the present invention, there is provided a method for classifying data, the method comprising:
constructing a fingerprint from the data, wherein the fingerprint comprises:
   for each of a plurality of predetermined character encoding schemes, at least one confidence value, representing a confidence that the data was encoded using said character encoding scheme; and
   for each of a subset of byte values, a frequency value, each of said frequency values representing the frequency of occurrence of a respective byte value in the data,
and performing a statistical classification of the data based on the fingerprint.

Embodiments therefore train a statistical classifier by generating a fingerprint for each piece of data in a prepared training set. The fingerprint is in the form of an array of values. The first part of the fingerprint is generated by inspecting the data with a number of algorithms, deploying well-known statistical methods and heuristic observations, which determine a set of confidence values that the data is text encoded using a set of predefined character encoding schemes. The second part of the array shows the frequency of occurrence of a subset of byte values in the data. Well-known statistical classification methods are then invoked to classify the fingerprints during this training phase. In order to identify whether some new data is textual data and which character encoding was originally used, the same process is applied and the resulting fingerprint is passed to the trained classification process which yields either the character encoding used or an indication that the data is not textual.

In some embodiments, this improves the recognition of character encodings and significantly reduces the number of false positives.

Whereas this invention is generally applicable to almost any text processing or content management system, one such application is in applying policies to electronic communications such as electronic mail and web uploads and downloads.

Normally, an organisation will set up a monitoring system that applies both organisation wide and sender specific policies to all types of electronic communication and file transfers over the network boundary between the organisation and the Internet. Commonly, these policies will include monitoring the content of the transfer and, in the case of electronic mail, any attachments that may be present. The monitoring will include checking for unsolicited electronic messages, commonly known as spam, on incoming mail and rejecting outgoing mail that contains rude or vulgar words or terms deemed commercially sensitive. Normally, this is done by having word lists that contain stop words and associated weighting values and using the frequency of occurrence of words on these stop lists and their associated weighting values to determine a final value, which can be compared with a threshold value to determine how the message will be handled.

The problem with the current systems is in determining the character encoding used and the language of the data being transferred, so that words within the data can be correctly identified and the correct word list selected when the policy is applied. In certain cases, such as email bodies or web downloads, there is provision in the headers to specify the character encoding used, but these are often incorrect and the language is very rarely specified.

In other cases, such as FTP transfers or files contained within archives, there is no means of specifying the character encoding or language; in fact there is no means of indicating whether the data is even textual and, if not, what type of data is present. Here the invention can be used to determine the nature of the data and subsequently ensure that an appropriate policy is applied.

In addition, one common anti-spam technique uses a Bayesian classifier that is trained with known spam and non-spam to create a statistical classification database. An incoming email message is then checked by the classifier against the classification database, and a probability that the message is spam is returned. Such a technique is dependent on identifying the words within the message, and to do this reliably requires that the character encoding used can be correctly identified. If the language can also be identified, it is possible to use different classification databases that are trained with spam and non-spam in the appropriate language.

### BRIEF DESCRIPTION OF DRAWINGS

Figure 1 is a block schematic diagram, illustrating a system in accordance with an aspect of the invention.
Figure 2 illustrates a first method in accordance with an aspect of the invention.
Figure 3 illustrates a form of fingerprint used in the method of Figure 2.
Figure 4 illustrates a method of training a classifier.
Figure 5 illustrates a second method in accordance with an aspect of the invention.
Figure 6 illustrates a form of a system in accordance with an aspect of the invention.
Figure 7 illustrates a form of training scheme for use in the system of Figure 6.

### DETAILED DESCRIPTION

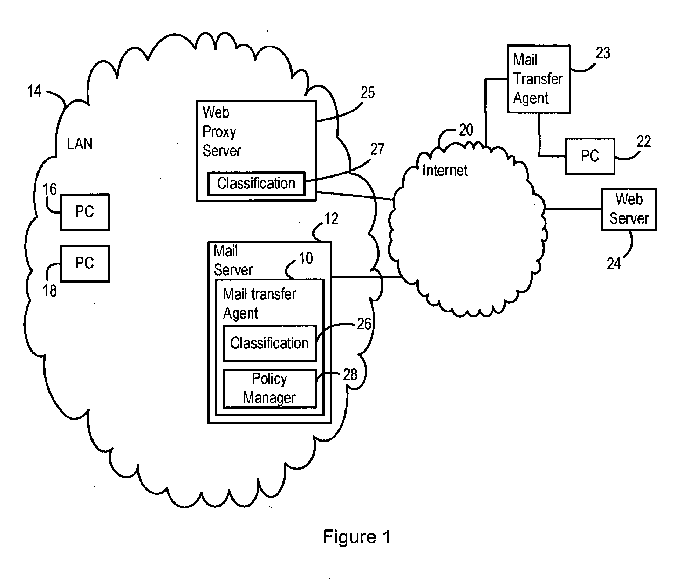

Figure 1 is a schematic diagram, illustrating a system operating in accordance with an aspect of the present invention, it being appreciated that this is an example only, and that the invention can be used in other ways.

In this example, a mail transfer agent (MTA) 10 is running on a mail server 12, located in a local area network (LAN) 14. As is conventional, a number of computers (PCs) 16, 18 may be connected to the LAN 14.

The LAN 14 has a connection to a wide area network, which in this illustrated embodiment is the internet 20. As is well known, a user of one of the PCs 16, 18 can establish a connection over the internet 20 to a wide variety of resources. For example, the user of one of the PCs 16, 18 can establish a connection over the LAN 14 to the mail transfer agent 10 for the internal transfer of electronic mail messages to another PC in the LAN 14. Similarly, the user of one of the PCs 16, 18 can establish a connection through the mail transfer agent 10 to transfer external mail messages to a PC 22 accessible over the internet through its own MTA 23.

As another example, the user of one of the PCs 16, 18 can establish a connection through a web proxy server 25 over the internet 20 to a web server 24, for example to access a web page hosted on the web server 24.

The mail transfer agent 10 includes a classification engine 26, for analysing the data being transferred, and a policy manager 28, for determining actions to be taken on the basis of this analysis.

Similarly, the web proxy server 25 includes a classification engine 27, for analysing the data being transferred, and the web proxy server 25 makes decisions on the basis of this analysis.

In the examples illustrated above, and in other situations, it is useful for the web proxy server 25, or the policy manager 28 to be able to establish information about the nature of the character encoding of electronic files that are being transferred. The same information can also be used in a web browser running on one of the PCs 16, 18.

For example, in the case of a document that is received over the internet, either in the form of an email message, or an attachment to an email message, it is useful for the mail transfer agent to be able to determine the character encoding used within the document; this allows further analysis of the document. The same analysis process can also be used by any other program that is handling the document, such as a web browser, in order to display the document correctly to the end user.

The method of analysis, performed in the classification engine 26 or 27 in this example, centres on the production of an encoding fingerprint from a sequence of bytes. The fingerprint is constructed in such a way that fingerprints from identical character encodings are sufficiently similar, and likewise fingerprints from different encodings are sufficiently distinct, that well-known statistical classification mechanisms such as Bayesian can accurately determine the classification of a new fingerprint. Usefully, fingerprints from arbitrary binary data not encoded in any way are all placed in the same classification.

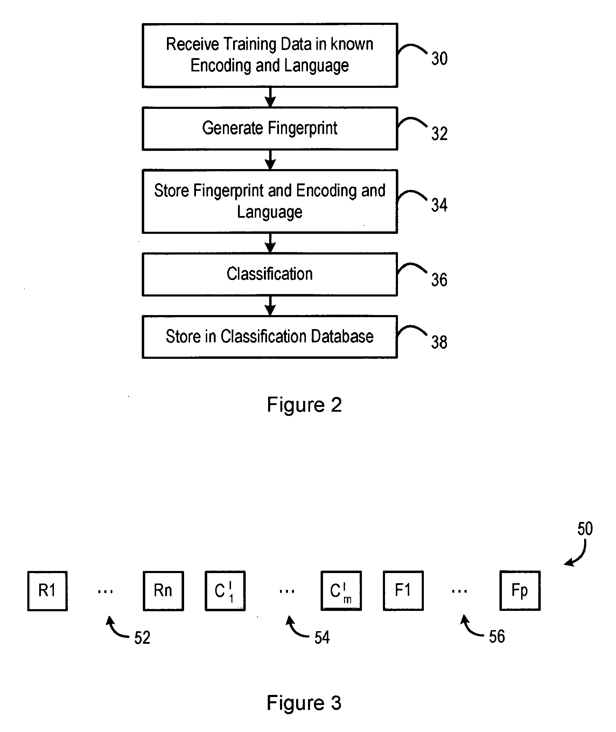

Thus Figure 2 illustrates a method of classifying data. In step 30, training data in a known character encoding are received. Where a character encoding scheme, such as ISO 8859-1, is often used to encode documents written in different languages, the training data preferably also includes files that are encoded using this same encoding scheme, but are written in different languages. The training data includes appropriate samples of non-textual data to ensure that the trained classifier can distinguish between textual data encoded using a particular character encoding scheme and non-textual data. In step 32, a fingerprint is generated, as described in more detail below. In step 34, the fingerprint and the known character encoding scheme (and the language of the original encoded document) are stored. In step 36, a classification is performed, and in step 38 the resulting classification is stored in a classification database corresponding to that known character encoding scheme or non-textual data.

Figure 3 is a schematic representation of the fingerprint 50 generated in step 32 above. An example of the process of generating the fingerprint is described here, but the mechanism is not limited to the actual algorithms so described. It will be clear to one skilled in the art that there are a number of ways in which a fingerprint can be constructed using various confidence algorithms coupled with various ways of generating tables of the frequency distribution of all or part of the data. In this illustrated embodiment, the fingerprint 50 consists of three parts. The first part 52 is an array of values representing the distribution ratio of common multi-byte character encodings. The second part 54 is an array of one or more confidence levels derived from specific algorithmic tests for a particular character encoding. The third part 56 is a table representing the frequency of occurrence of a subset of byte values in the data.

The first two sections of the fingerprint are generated from algorithms such as those used in the ICU and Mozilla libraries.

The first part 52 of the fingerprint is particularly relevant to identifying files in multi-byte character encodings such as those used to encode texts in the Chinese, Japanese and Korean languages. This uses well known techniques based on identifying the most commonly used characters from a large corpus in each language. The most frequent characters cover a large part of any text; moreover the most frequent characters differ significantly between the three languages. The algorithm takes the distribution ratio defined as the number of most frequent characters found in the sample divided by the number of characters in the sample less the number of most frequent characters. Thus the most common characters in Japanese, Simplified Chinese, Traditional Chinese and Korean are encoded to different byte values, so the ratios that are obtained for documents that have been encoded in these are different. There are also rules for which bytes can be in which positions and, if an illegal combination is found, then the process can terminate at once with a ratio of zero. The ratios for each of n multi-byte languages and associated character encodings R1 to Rn are stored in the first section of the fingerprint.

Thus, for every file, a first ratio R1 is formed by determining a distribution ratio based on the number of occurrences of the characters that appear most often in a first language and associated character encoding, a second ratio R2 is formed by determining a distribution ratio based on the number of occurrences of the characters that appear most often in a second language and associated character encoding, and so on. A high value of one of these ratios might therefore indicate a file encoded in the corresponding character encoding and can be used as such by the classification process.

The second part 54 of the fingerprint contains one or more confidence levels that the character encoding is in one of m specific character encoding schemes. The first step is to analyse single byte character encoding schemes where there is a small alphabet, and the distribution ratio used in the previous step is not effective. For each potential encoding, one or more confidence levels are produced by statistical analysis. Again, the statistics are generated by inspecting a large corpus of text for each language. For example, one confidence level is computed using a 64 by 64 matrix that represents the frequency of the most common character pairs (bigrams) determined by analysis of multiple text examples. Another confidence level could be computed in a similar fashion using the most common trigrams. These confidence levels for each known encoding are stored in the fingerprint. For example, a text might give rise to a confidence level C¹₁, that it is in a first character encoding scheme, and to two independently calculated confidence levels C¹₂ and C²₂ that it is in a second character encoding scheme, and so on.

The next step is to generate a confidence level in the fingerprint for those encodings which can be identified by distinctive byte sequences. These contain a special defined value called a Byte Order Marker (BOM). A value for the confidence that the encoding is UTF-8 can be generated by looking for the BOM sequence EF BB BF and then examining the remainder of the data for valid UTF-8 character byte sequences. Likewise the values for UTF-16 and UTF-32 can be computed by looking for the appropriate BOM and examining the remainder of the data for valid character byte sequences, but this time also making allowance for the endianness of the 16 bit (2 byte) and 32 bit (4 byte) values respectively.

The final step is to generate a value in the fingerprint that represents the confidence that one of the series of ISO 2022 encodings is being used. These are widely used for Chinese, Japanese and Korean text and use embedded escape sequences as a shift code. Each character encoding in the ISO 2022 series has a different shift code and a confidence level that the text is encoded in a particular ISO 2022 encoding (and hence the language) can be generated based on the presence or otherwise of these known shift codes.

Thus, there are different types of heuristic analysis that can be performed on the data, with each providing a value indicating the confidence that the particular data was encoded using a particular character encoding scheme. Multiple types of analysis can be used to provide confidence levels for the same encoding scheme. For example, analysis of the most common bigrams in the data might give a confidence level, expressed as a first percentage value, that the data was encoded using a particular scheme. At the same time, analysis of the most common trigrams in the file might give a confidence level, expressed as a second percentage value, that the file was encoded using that same particular scheme. While one might expect a relationship to exist between the first and second percentage values, they will not necessarily be equal.

The resulting confidence levels Cⁱⱼ, where j={1,... m}, with m being the number of encodings, and i={1,...,kⱼ}, with kⱼ being the number of confidence scores for the j^{th} encoding, are stored in the fingerprint.

The third part 56 of the fingerprint does not rely on any well-known algorithms. Instead, it is designed to provide greater differentiation between members of the ISO 8859 series of character encoding schemes, and between languages that can be encoded using any one of these encodings, such as the ISO 8859-1 (Latin-1) encoding. These encoding schemes differ from each other in the characters that are represented by byte values in the A0₁₆-FF₁₆ range. Therefore, values F1 to Fp in the third part 54 of the fingerprint 50 are computed representing the frequencies of occurrence of a subset of the possible byte values in the text being considered. For example, the fingerprint 50 can include values representing the respective frequencies of occurrence of the byte values A0₁₆-FF₁₆, in particular the values C0₁₆-FF₁₆, or of the byte values 20₁₆-40₁₆, or any other subset.

The fingerprint generator described above will therefore produce a fingerprint 50 from a set of bytes. In order to use the fingerprint, a meta-classifier or meta-algorithm might be used. For example, in this illustrated embodiment, we use the well-known statistical classification mechanism of Adaptive Boosting (described in "A Short Introduction to Boosting", Freund, et al., Journal of Japanese Society for Artificial Intelligence, 14(5):771-780, September, 1999, English translation at http://www.site.uottawa.ca/~stan/csi5387/boost-tut-ppr.pdf) in combination with C4.5 decision trees to determine the probability that a set of bytes is text encoded using a particular character encoding scheme, or is non-textual data. In order to generate a classification database we use suitable training data to train a statistical classifier. A large corpus of text encoded in each of the character encoding schemes of interest is needed. The fingerprint of each is then computed in step 32 of the method and passed to the classifier along with information about the encoding used. Appropriate non-textual data is included in the training data so that the classifier can be trained to distinguish not only between texts encoded using each of the character encoding schemes but also non-textual data.

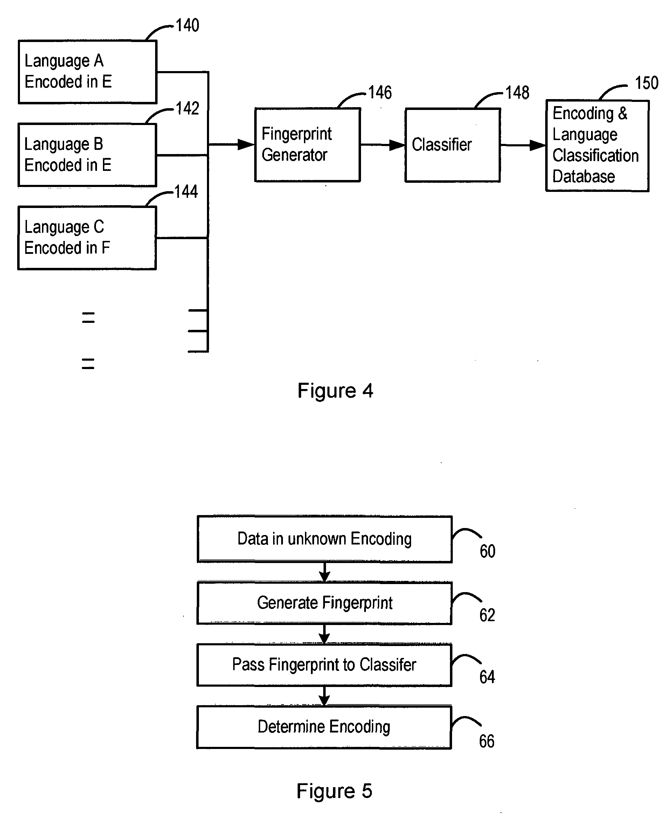

Figure 4 is a schematic diagram illustrating this training process. Texts in all of the languages of interest, including texts 140 in language A that are encoded using encoding scheme E, texts 142 in language B that are encoded using encoding scheme E, and texts 144 in language C that are encoded using encoding scheme F, are passed to a fingerprint generator 146. The fingerprints, generated as described above, are passed to a classifier 148, and the results are stored in an encoding and language classification database 150.

Figure 5 is a flow chart illustrating the method used to determine the character encoding in which a new sequence of bytes is encoded. The method is performed by a computer program product, comprising computer readable code suitable for causing a computer to perform the method. The computer program product can be associated with, or form part of, a computer program product for handling data transfer either in files or in a data stream. For example, the computer program product might be a mail transfer agent or a web proxy server. The computer program product can be run on a computer system for handling data transfer, as shown in Figure 1.

In step 60, the data is received, either in a file or in a data stream, and in step 62 the fingerprint 50 is generated, using the same techniques described above. Thus, the fingerprint 50 contains the same three parts 52, 54, 56.

In step 64, the fingerprint 50 is passed to the classifier. In step 66, the classifier uses the statistical classification mechanism described above to determine from the fingerprint 50 which character encoding scheme has been used. Where appropriate, for example when an encoding scheme is used to encode documents written in different languages, the classifier is also able to determine which language was used to write the document.

Reference has been made here to determining not only that the data has been encoded using a particular character encoding scheme, but also whether the data is textual or non-textual. The mechanism can also be expanded to distinguish between different types of non-textual data. For example, the classification process could include heuristics checking whether the first few bytes of a file include the start sequences typical in program executables (such as .exe files), music files, images (such as .gif files) and so on, and the results could be added to those looking for character encodings, allowing the classifier to return more information about the type of non-textual data encountered. Even in this case, however, it remains advantageous to perform the remainder of the fingerprinting, because although the first few bytes of a file might fulfil criteria typical of the start of a .exe file, for example, it could also be a valid Chinese document.

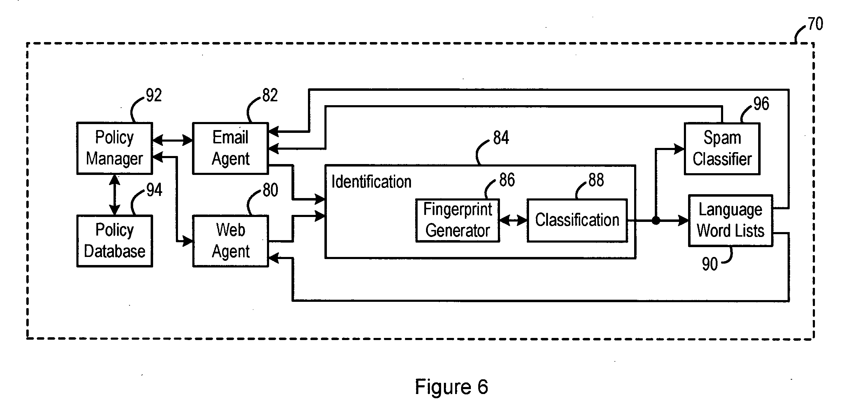

Figure 6 shows in more detail the logical structure of a system 70 that can be implemented in a server computer for handling communications across a wide area network, as shown in Figure 1.

In the structure 70 shown in Figure 6, the web proxy server and the mail server each have access to a single classification engine, unlike the arrangement shown in Figure 1, in which they each have access to a separate classification engine.

Thus, a web agent 80 and an email transfer agent 82 are connected to a character encoding and language identification block 84. As described above, the character encoding and language identification block 84 includes a fingerprint generator 86, which forms a fingerprint of the type described above, and a classification block 88, for identifying the class to which data belongs, based on the features of the fingerprint compared with the fingerprints of data of known types. In particular, the classification block 88 may be trained in such a way that it can distinguish between character encoding schemes used to encode the data, and moreover can distinguish between data that contain texts written in different languages, even when these texts are all encoded using the same character encoding, such as ISO 8859-1.

The character encoding and language identification block 84 has access to language word lists 90, which can be used by the web agent 80 and email agent 82 in conjunction with a policy manager 92 and a policy database 94. The character encoding identification block 84 also has access to a spam classifier 96, which can similarly be used by the email agent 82 in conjunction with the policy manager 92 and the policy database 94.

The system can include other agents that implement policies for different transfer mechanisms. In the case of the email agent 82, this can intercept both incoming and outgoing messages and apply the relevant policies. The result might, for example, be that a message is rejected or quarantined.

When the system starts, the policy manager 92 passes to the agents such as the web agent 80 and the email agent 82 the relevant policies for the channel they are monitoring. Thus the email agent will be passed the email checking policies.

The policy database 94 is capable of storing both organisation wide and sender specific policies that are to be applied to data being transferred across the boundary between an organisation's internal network and The Internet. For example, one type of policy determines whether data being transferred contains words held in a weighted word list, returning the sum of the weights and determining the disposition of the transfer based on that value. The word lists are given a generic name such as "Vulgar" or "Sensitive". Another type of policy used by an email agent 82 is a "spam" detection policy, for determining whether an incoming email message should be identified as an unsolicited message. The application of policies such as these is character encoding dependent, and often language dependent.

When an agent monitoring a particular channel such as email receives some data it applies the policies passed to it on start up. The agent passes the data to the character encoding identification block 84 in order to determine whether the data is textual, and if so, the character encoding used so that the data can be decoded correctly. Moreover, the language used can also be determined. This allows various useful procedures to be performed.

Having made this determination of the language, a content policy can be applied with some knowledge of the language used. This allows for a more efficient application of the relevant policy.

For example, if the test is a word list check then, based on the language result, a suitable word list containing words and weighting values for that language would be chosen. This allows not just for the different words themselves to be checked but also for the facts that some words are more offensive in one language than their direct translation would be in another, and that some words are offensive in one language but inoffensive in another. The agent then compares the sum of the weighted values with a threshold specified in the policy.

As mentioned, the test for spam email messages can also be adapted to take account of the language in which the message is written.

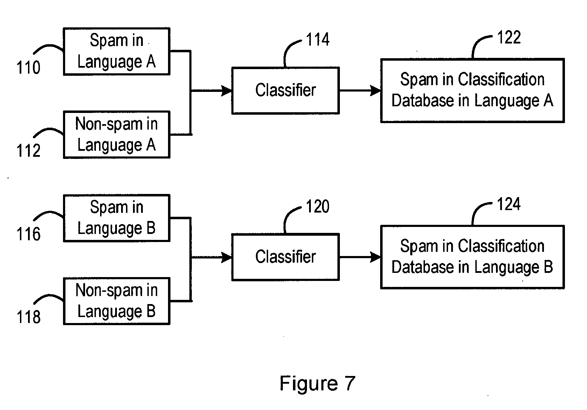

Figure 7 shows the form of a classification training mechanism for populating a database in the spam classifier 96. Thus, spam messages in Language A 110 and non-spam messages in Language A 112 are passed to a classifier 114, while spam messages in Language B 116, and non-spam messages in Language B 118 are passed to a classifier 120. Of course, this process can be repeated for any desired number of languages. By using a Bayesian or similar classification test, the classification engine can identify the features of spam messages 122 in Language A, and can identify the features of spam message 124 in language B, and so on.

Then, when an incoming email message is received by the email agent 82, this can be passed to the spam classifier 96 after passing through the identification block 84. This allows the message to be passed to the classification engine which uses the relevant spam classification database depending on the language identified. This therefore allows for a more accurate identification of spam messages.

There is therefore described a system that can determine whether a piece of data is textual, the character encoding scheme used to encode the text and the language in which the text has been written.

## Claims

1. A method for classifying data, the method comprising:
constructing a fingerprint from the data, wherein the fingerprint comprises:
for each of a plurality of predetermined character encoding schemes, at least one confidence value, representing a confidence that the data was encoded using said character encoding scheme; and
for each of a subset of byte values, a frequency value, each of said frequency value representing the frequency of occurrence of a respective byte value in the data, and
performing a statistical classification of the data based on the fingerprint.

2. A method as claimed in claim 1, wherein the fingerprint comprises confidence values determined from examining bigrams and/or trigrams in the data.

3. A method as claimed in claim 1 or 2, wherein the fingerprint comprises, for at least one of the plurality of predetermined character encoding schemes, a plurality of confidence values, each representing an independent assessment of confidence that the data was encoded using said encoding scheme.

4. A method as claimed in claim 3, wherein the plurality of confidence values comprise a first confidence value determined from examining bigrams in the data and a second confidence value determined from examining trigrams in the data.

5. A method as claimed in any preceding claim, comprising performing the statistical classification using a set of base classifiers whose results are aggregated using a meta-classifier or meta-algorithm such as Adaptive Boosting.

6. A method as claimed in any preceding claim, wherein the step of performing the statistical classification comprises distinguishing textual data encoded in one of the predetermined character encoding schemes from non-textual data, and optionally further comprising, if it is determined that the data comprises textual data, identifying the character encoding scheme used for encoding said data, and/or identifying the language represented by the textual data.

7. A method as claimed in claim 6, further comprising, if it is determined that the data comprises non-textual data, identifying the type of non-textual data, for example by means of a start sequence of the data.

8. A method as claimed in any preceding claim, wherein said subset of byte values comprises byte values in the range A0₁₆-FF₁₆.

9. A method of controlling data transfers, comprising:
classifying said data by means of a method according to any of claims 1 to 8; and
controlling the data transfer based on a result of the classification.

10. A method as claimed in claim 9, comprising:
identifying textual data in said data;
identifying a language represented by the textual data; and
applying a language-specific policy to the data based on the identified language.

11. A method as claimed in claim 10, wherein the step of applying a language-specific policy to the data comprises testing for the presence of certain words in a respective list for the identified language.

12. A method as claimed in claim 9, wherein the data to be transferred comprises an email message, and wherein the step of applying a language-specific policy to the data comprises applying a language-specific test for spam.

13. A method as claimed in any of claims 9 to 12, comprising identifying said data in a file or in a data stream.

14. A computer program product, comprising computer readable code, suitable for causing a computer to perform a method as claimed in any of claims 1 to 13.

15. A computer system, comprising a computer program product as claimed in claim 14.

## Patentansprüche

1. Verfahren zum Klassifizieren von Daten, umfassend:
Konstruieren eines Fingerabdrucks der Daten, wobei der Fingerabdruck Folgendes umfasst:
für eine Mehrzahl vorgegebener Zeichenkodierungssysteme (character encoding schemes) jeweils mindestens einen Konfidenzwert, der eine Konfidenz darstellt, dass die Daten unter Verwendung desselben Zeichenkodierungssystems kodiert wurden, und
für eine Untergruppe von Byte-Werten jeweils einen Häufigkeitswert, wobei die Häufigkeitswerte jeweils die Häufigkeit wiedergeben, mit der ein entsprechender Byte-Wert in den Daten vorkommt, und
Durchführen einer statistischen Klassifizierung der Daten auf der Basis des Fingerabdrucks.

2. Verfahren nach Anspruch 1, wobei der Fingerabdruck Konfidenzwerte umfasst, die durch Untersuchung von Digrammen und/oder Trigrammen in den Daten bestimmt werden.

3. Verfahren nach Anspruch 1 oder 2, wobei der Fingerabdruck für mindestens eines der Mehrzahl vorgegebener Zeichenkodierungssysteme eine Mehrzahl Konfidenzwerte umfasst, die jeweils eine unabhängige Beurteilung der Konfidenz darstellen, dass die Daten unter Verwendung desselben Zeichenkodierungssystems kodiert wurden.

4. Verfahren nach Anspruch 3, wobei die Mehrzahl Konfidenzwerte einen ersten Konfidenzwert umfasst, der durch Untersuchung von Digrammen in den Daten bestimmt wird, und einen zweiten Konfidenzwert, der durch Untersuchung von Trigrammen in den Daten bestimmt wird.

5. Verfahren nach einem der vorhergehenden Ansprüche, umfassend das Durchführen der statistischen Klassifizierung unter Verwendung eines Satzes von Basis-Klassifikatoren, deren Ergebnisse unter Verwendung eines Meta-Klassifikators oder Meta-Algorithmus, wie Adaptive Boosting, aggregiert werden.

6. Verfahren nach einem der vorhergehenden Ansprüche, wobei der Schritt Durchführen der statistischen Klassifizierung umfasst: Unterscheiden von Textdaten, die in einem der vorgegebenen Zeichenkodierungssysteme kodiert sind, von Nicht-Textdaten, und gegebenenfalls zudem umfasst: wenn ermittelt wird, dass die Daten Textdaten umfassen, das Identifizieren des für die Kodierung dieser Daten verwendeten Zeichenkodierungssystems und/oder das Identifizieren der durch die Textdaten wiedergegebenen Sprache.

7. Verfahren nach Anspruch 6, das zudem umfasst: wenn ermittelt wird, dass die Daten Nicht-Textdaten umfassen, das Identifizieren der Art der Nicht-Textdaten, zum Beispiel mithilfe einer Startsequenz der Daten.

8. Verfahren nach einem der vorhergehenden Ansprüche, wobei die Untergruppe von Byte-Werten Byte-Werte im Bereich A0₁₆-FF₁₆ umfasst.

9. Verfahren zum Steuern von Datenübertragungen, umfassend:
Klassifizieren der Daten mithilfe eines Verfahrens nach einem der Ansprüche 1 bis 8 und
Steuern der Datenübertragung auf der Basis von einem Ergebnis der Klassifizierung.

10. Verfahren nach Anspruch 9, umfassend:
Identifizieren von Textdaten in den Daten,
Identifizieren einer durch die Textdaten wiedergegebenen Sprache und
Anwenden einer sprachenspezifischen Politik auf die Daten auf der Basis der identifizierten Sprache.

11. Verfahren nach Anspruch 10, wobei der Schritt Anwenden einer sprachenspezifischen Politik auf die Daten das Testen des Vorliegens bestimmter Wörter in einer entsprechenden Liste für die identifizierte Sprache umfasst.

12. Verfahren nach Anspruch 9, wobei die zu übertragenden Daten eine Email-Botschaft umfassen und wobei der Schritt Anwenden einer sprachenspezifischen Politik auf die Daten umfasst: Anwenden eines sprachenspezifischen Tests auf Spam.

13. Verfahren nach einem der Ansprüche 9 bis 12, umfassend das Identifizieren der Daten in einer Datei oder in einem Datenstrom.

14. Computerprogramm-Produkt, umfassend einen computerlesbaren Code, der einen Computer veranlassen kann, das Verfahren nach einem der Ansprüche 1 bis 13 durchzuführen.

15. Computersystem, umfassend ein Computerprogramm-Produkt nach Anspruch 14.

## Revendications

1. Procédé de classification de données, le procédé comprenant :
construire une empreinte à partir des données, où l'empreinte comprend :
pour chacun d'une pluralité de schémas de codage de caractères prédéterminés, au moins une valeur de confidence, représentant une confidence que les données ont été codées en utilisant ledit schéma de codage de caractères ; et
pour chacun d'un sous-ensemble de valeurs d'octets, une valeur de fréquence, chacune desdites valeur de fréquence représentant la fréquence de survenue d'une valeur d'octet respective dans les données, et
exécuter une classification statistique des données sur la base de l'empreinte.

2. Procédé selon la revendication 1, dans lequel l'empreinte comprend des valeurs de confidence déterminées en examinant des bi-grammes et/ou trigrammes dans les données.

3. Procédé selon la revendication 1 ou 2, dans lequel l'empreinte comprend, pour au moins un de la pluralité de schémas de codage de caractères prédéterminés, une pluralité de valeurs de confidence, chacune représentant une évaluation de confidence indépendante que les données ont été codées en utilisant ledit schéma de codage.

4. Procédé selon la revendication 3, dans lequel la pluralité de valeurs de confidence comprennent une première valeur de confidence déterminée par l'examen de bi-grammes dans les données et une deuxième valeur de confidence déterminée par l'examen de trigrammes dans les données.

5. Procédé selon l'une quelconque des revendications précédentes, comprenant une exécution de classification statistique utilisant un ensemble de classificateurs de base dont les résultats sont agrégés en utilisant un méta-classificateur ou méta-algorithme comme la Stimulation de la Capacité d'adaptation.

6. Procédé selon l'une quelconque des revendications précédentes, dans lequel l'étape d'exécution de la classification statistique comprend la distinction de données textuelles codées dans un des schémas de codage de caractères prédéterminés à partir de données non textuelles, et en option comprenant en outre, s'il est établi que les données comprennent des données textuelles, l'identification du schéma de codage de caractères utilisé pour le codage desdites données, et/ou l'identification du langage représenté par les données textuelles.

7. Procédé selon la revendication 6, comprenant en outre, s'il est établi que les données comprennent des données non textuelles, l'identification du type de données non textuelles, par exemple au moyen d'une séquence de départ des données.

8. Procédé selon l'une quelconque des revendications précédentes, dans lequel ledit sous-ensemble de valeurs d'octets comprend des valeurs d'octets dans la plage de A0₁₆-FF₁₆.

9. Procédé de commande de transferts de données, comprenant :
la classification desdites données au moyen d'un procédé selon l'une quelconque des revendications 1 à 8 ; et
la commande du transfert des données sur la base d'un résultat de la classification.

10. Procédé selon la revendication 9, comprenant :
l'identification de données textuelles dans lesdites données ;
l'identification d'un langage représenté par les données textuelles ; et
l'application d'une police spécifique au langage aux données sur la base du langage identifié.

11. Procédé selon la revendication 10, dans lequel l'étape d'application d'une police spécifique au langage aux données comprend le test de la présence de certains mots dans une liste respective pour le langage identifié.

12. Procédé selon la revendication 9, dans lequel les données à transférer comprennent un message email ; et où l'étape d'application d'une police spécifique au langage aux données comprend l'application d'un test spécifique au langage pour des spams.

13. Procédé selon l'une quelconque des revendications 9 à 12, comprenant l'identification desdites données dans un dossier ou dans un flux de données.

14. Produit de programme d'ordinateur, comprenant un code lisible par ordinateur, apte à amener un ordinateur à exécuter un procédé tel que revendiqué dans l'une quelconque des revendications 1 à 13.

15. Système d'ordinateur, comprenant un produit de programme d'ordinateur selon la revendication 14.
